# EUROPÄISCHE PATENTSCHRIFT

(11) **EP 1 582 263 B1**
(45) Veröffentlichungstag und Bekanntmachung des Hinweises auf die Patenterteilung: **17.12.2008**
(21) Anmeldenummer: 04008137.4
(22) Anmeldetag: 02.04.2004
(51) Int. Cl.: B03D 1/26, E03F 5/22

(54) **Drucklufthebeanlage für fliessfähige Medien**
Pressurized air lifting device for flowable materials
Dispositif de levage à air sous pression pour matières fluides

(43) Veröffentlichungstag der Anmeldung: 05.10.2005
(73) Patentinhaber: HUBER DeWaTec GmbH, 45768 Marl (DE)
(72) Erfinder: Rico Schuhmann, 45897 Gelsenkirchen (DE)
(74) Vertreter: Hilleringmann, Jochen

(56) Entgegenhaltungen:
- EP-A- 0 968 965
- EP-A- 1 052 228
- DE-U- 20 105 661

## Beschreibung

Die Erfindung betrifft eine Drucklufthebeanlage für fließfähige Medien, die insbesondere zum Überführen von Abwasser aus einer Kammer einer (Klein-) Kläranlage in eine andere Kammer der Kläranlage oder aus dieser heraus einsetzbar ist.

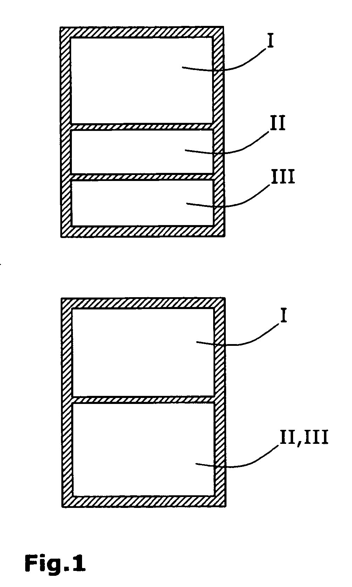

In modernen vollbiologischen Kleinkläranlagen wird in der Regel häusliches Abwässer physikalisch und biologisch behandelt. Die Reinigung findet in drei Schritten statt (siehe Fig. 1). Im Bereich I, der Vorklärung, werden ungelöste Abwasserinhaltsstoffe durch Absinken oder Aufschwimmen abgeschieden. In der folgenden biologischen Reinigungsstufe werden die gelösten Schmutzstoffe von Mikroorganismen unter Zuhilfenahme von Sauerstoff verarbeitet. In der Regel wird dazu der Inhalt der biologischen Stufe belüftet, wobei neben der Versorgung mit Sauerstoff die Durchmischung einen hohen Stellenwert hat.

Bei den Lebensprozessen der Mikroorganismen entsteht ein Biomassenzuwachs ebenso wie abgestorbene Mikroorganismen. Die überflüssigen oder abgestorbenen Mikroorganismen gelangen mit dem biologisch gereinigten Abwasser in den Bereich III, die Nachklärung, wo sie wiederum durch Absinken abgeschieden werden. Der abgeschiedene Bioschlamm wird regelmäßig in den Bereich 1 zum dort bereits befindlichen Schlammvolumen gefördert (siehe Fig. 1).

Die Bereiche II und III können räumlich getrennt (z.B. bei einer Festbettanlage mit freiem Durchfluss und immobiler Biomasse) oder räumlich zusammenliegend, aber in den Vorgängen zeitlich getrennt (z.B. bei einer SBR-Anlage ohne freien Durchfluss und mit mobiler Biomasse) sein.

Der Transport des Abwassers durch die jeweiligen Stufen und aus der Kläranlage heraus kann entweder im freien Durchfluss erfolgen, oder, wenn undurchlässige Trennwände bestehen, durch Fördervorgänge erfolgen.

So steht die Bezeichnung "SBR" für "Sequencing Batch Reactor", also für die kontrolliert nacheinander ablaufende Verarbeitung bestimmter Abwassermengen.

Hier findet in der zweiten Stufe nicht nur die biologische Reinigung statt, sonder, zeitlich nachgeschaltet, auch der Nachklärvorgang. Dazu wird die Belüftung, die vorher auch die Durchmischung von Abwasser und Biologie durchgeführt hat, um Schutzstoffe und Mikroorganismen in Kontakt miteinander zu bringen, abgeschaltet. Damit ist die Möglichkeit gegeben, innerhalb der nun beruhigten biologischen Stufe den Absetzvorgang durchzuführen, der ansonsten in der Nachklärung zur Separation des biologischen Schlammes vom gereinigten Abwasser durchgeführt wird.

In dieser Zeit darf natürlich kein Zu- oder Abfluss den Trennungsvorgang stören. Daraus wird deutlich, warum beim SBR-Verfahren kein Austausch zwischen den Kammern, mithin keiner freier Durchfluss, zugelassen werden darf.

Das setzt neben undurchlässigen Trennwänden, die den freien Durchfluss verhindern, auch Fördereinrichtungen voraus, die den Transport des Abwassers übernehmen.

Dabei sind im wesentlichen heute zwei Fördertypen gebräuchlich, die motorgetriebene Pumpe und die luftbetriebene Drucklufthebeanlage, deren Funktion nachfolgend beschrieben wird.

### 1. Funktion der Ducklufthebeanlagen

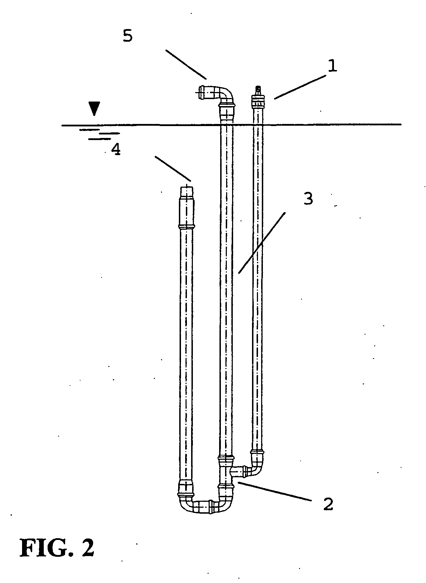

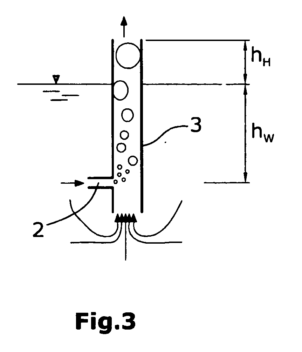

Das Grundprinzip der Druckluftheber ist seit langem bekannt (siehe z.B. EP 0 968 965 A1). Ein Beispiel ist in Fig. 2 gezeigt. Ein an beiden Enden offenes Rohr wird senkrecht in eine Flüssigkeit (z.B. Wasser) oder ein Flüssigkeits-Feststoff-Gemisch getaucht. Durch Einblasen eines Gases (z.B. Luft) unterhalb des Flüssigkeitsspiegels wird die Flüssigkeit im Rohrinneren mit Gasblasen durchmischt (siehe auch Fig. 3). Das Flüssigkeits-Gasgemisch hat eine geringere Dichte als die reine Flüssigkeit. Dadurch steigt das Flüssigkeits-Gasgemisch auf und nachdrückende Flüssigkeit strömt am unteren Rohrende nach.

Die Kraft, mit der gefördert wird, ist im wesentlichen abhängig von der Einblastiefe h_{W}, und bestimmt wiederum die Höhe h_{H}, bis zu der die Einrichtung fördern kann.

Der Vorteil des Einsatzes von Drucklufthebeanlagen bei der Abwasserreinigung besteht im wesentlichen darin, dass sich dabei keine drehenden oder elektrischen Teile im Abwasser befinden und dass diese Variante sehr wartungsarm ist.

### Der Einsatz von Drucklufthebern bei SBR-Kläranlagen

Bei SBR-Anlagen müssen folgende Transportvorgänge durchgeführt werden:
1. Transport einer Abwassercharge von der Vorklärung in die biologische Stufe (Zuflussheber).
2. Nach der biologischen Reinigung Transport einer Charge gereinigten Abwassers aus der biologischen Stufe heraus in eine Versickerung oder Ableitung (Klarwasserabzug).
3. Nach der biologischen Reinigung und nach dem Abzug gereinigten Wassers Entnahme des gebildeten Überschussschlammes aus der biologischen Stufe und Förderung in die Vorklärung (Überschussschlammabzug).

Entsprechend der geltenden Vorschriften wird die Reinigungsleistung von Kleinkläranlagen anhand von Probenahmen des Ablaufs gemessen, wobei bestimmte Werte einzuhalten sind. Gemessen werden organische und anorganische Restverschmutzungen des abfließenden Wassers. Es ist einsichtig, dass dieser Ablauf daher möglichst frei zu halten ist von z.B. Mikroorganismen, die sich im selben Bereich befinden, aus dem das gereinigte Abwasser entnommen wird.

Da jedoch während der Phase der biologischen Reinigung das Wasser-Schlamm-Gemisch der biologischen Stufe intensiv umgewälzt wird, ist damit zu rechnen, dass dabei auch Belebtschlammflocken in das Ansaugrohr des Klarwasserabzugs gelangt und beim nächsten Abtransport mitgezogen wird und unter Umständen in die Probenahme gelangt. Dadurch könnte trotz guter Reinigungsleistung ein Anlagenversagen mit allen rechtlichen und wirtschaftlichen Folgen indiziert werden.

Aus DE-U-201 05 661 ist eine Kleinkläranlage mit Drucklufthebeanlage bekannt, die eine Rohrleitung aufweist, welche einen im wesentlichen V-förmigen oder U-förmigen ersten Abschnitt aufweist, an dessen ersten nach oben verlaufenden Teil eine Druckluftleitung nahe dem unteren Ende dieses ersten Teils anschließbar ist und an dessen vom unteren Ende des ersten Abschnitts aus nach oben verlaufenden zweiten Teil sich ein abwärts gerichteter zweiter Abschnitt der Rohrleitung anschließt. Dieser zweite Abschnitt ist nach unten gerichtet. Von dieser Rohrleitung zweigt eine Belüftungsleitung ab. Diese Belüftungsleitung mündet entweder in den zweiten Teil des ersten Rohrleitungsabschnitts nahe dessen oberen Ende ein oder aber zweigt von einem Horizontalrohrabschnitt ab, der zwischen den zweiten Teil des im wesentlichen V-förmigen oder U-förmigen ersten Abschnitts und dem abwärts gerichteten zweiten Abschnitt angeordnet ist.

Aufgabe der Erfindung ist es, durch konstruktive Änderungen an der bisher eingesetzten Drucklufthebeanlagenform den Abtransport von Belebtschlammflocken über den Klarwasserabzug zu verhindern.

Zur Lösung dieser Aufgabe wird mit der Erfindung eine Drucklufthebeanlage für fließfähige Medien, insbesondere zum Überführen von Abwasser aus einer Kammer einer Kleinkläranlage in eine andere Kammer der Kleinkläranlage oder aus dieser heraus vorgeschlagen, wobei die Drucklufthebeanlage versehen ist mit einer Rohrleitung, die folgende Abschnitte aufweist:
- einen im wesentlichen V- oder U-förmig bzw. allgemein bogenförmig ausgebildeten ersten Abschnitt, an dessen ersten nach oben verlaufenden Teil eine Druckluftleitung nahe dem unteren Ende anschließbar ist und an dessen zweiten nach oben verlaufenden Teil sich ein abwärts gerichteter zweiter Abschnitt anschließt,
- wobei vom abwärts gerichteten zweiten Abschnitt unterhalb des Übergangs vom zweiten Teil des ersten Abschnitts der Rohrleitung zu dessen zweiten Abschnitt ein nach oben verlaufender und insbesondere senkrecht verlaufender dritter Abschnitt nach oben abzweigt.

Nach der Erfindung ist also vorgesehen, dass von dem schräg nach unten verlaufenden Ansaugrohr ein im wesentlichen senkrecht nach oben verlaufendes Entlüftungsrohr abzweigt, das oberhalb des maximalen Flüssigkeitsspiegels endet.

Zusätzlich kann vom höchsten Punkt des Rohrleitungsabschnitts, der aus dem Übergang des zweiten Teils des ersten Abschnitts zum zweiten Abschnitt der Rohrleitung besteht, eine weitere Entlüftungsleitung im wesentlichen senkrecht nach oben abzweigen.

Zur Erläuterung der Erfindung soll zunächst nachfolgend anhand von Fig. 2 auf den Aufbau des Klarwasserabzugshebers der bekannten Uponor-Anlagen vom Typ BatchPLUS^{®} eingegangen werden.

Bei den dort verwendeten Drucklufthebern wird über den Schlauchanschluss 1, und das damit verbundene Rohr Luft an der Einblasöffnung 2 in ein senkrechtes Rohr 3 eingeblasen. In diesem Rohr steigt das so entstehende leichtere Luft- Wassergemisch auf und kann somit über die Ablauföffnung abfließen. Zeitgleich strömt Wasser an der Ansaugöffnung 4 nach.

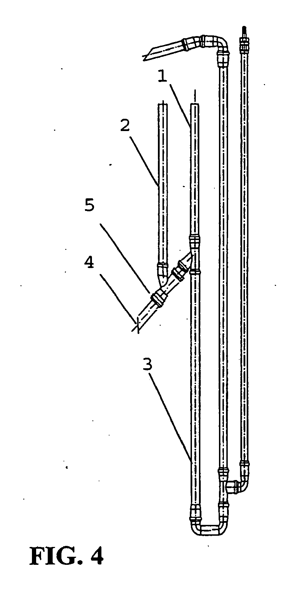

Die erfindungsgemäß geänderte Variante des Klarwasserabzugshebers gemäß Fig. 4 unterscheidet sich von der vorgenannten Ausführungsform insoweit, als das Rohr mit der Ansaugöffnung 4 bis über den (maximal zu erwartenden) Wasserspiegel verlängert wird, um so das Eindringen von absinkendem Belebtschlamm zu verhindern. Durch die seitliche Verlegung der Ansaugöffnung 4 kann es nun dazu kommen, dass aufsteigende Luftblasen in die Ansaugöffnung 4 gelangen und entlang der oberen Rohrwandung aufsteigen. Dadurch entsteht im Ansaugrohr 5 eine Strömung, durch die Schlamm in das Ansaugrohr gezogen wird. Durch das Entweichen der Luft über die Entlüftung 2 des Ansaugrohres wird an dieser Stelle die Strömung unterbrochen. So wird zuverlässig verhindert, dass Schlamm bis in das senkrecht nach unten geführte Rohr 3 und somit in den Ablauf gelangt.

Sollte dennoch Luft über die Entlüftung 2 hinaus in das Ansaugrohr gelangen, kann diese in dem senkrecht nach oben geführten Rohr 1 entweichen.

Die Wirksamkeit dieser Konstruktionsänderung konnte in verschiedenen internen Versuchsreihen eindrucksvoll bestätigt werden.

## Patentansprüche

1. Drucklufthebeanlage für fließfähige Medien, insbesondere zum Überführen von Abwasser aus einer Kammer einer Kleinkläranlage in eine andere Kammer der Kleinkläranlage oder aus dieser heraus, mit
- einer Rohrleitung, die in Gebrauchsstellung folgende Abschnitte aufweist:
- einen im wesentlichen V- oder U-förmig bzw. allgemein bogenförmig ausgebildeten ersten Abschnitt, an dessen ersten nach oben verlaufenden Teil eine Druckluftleitung nahe dem unteren Ende anschließbar ist und an dessen zweiten nach oben verlaufenden Teil (3) sich ein abwärts gerichteter zweiter Abschnitt (5) anschließt, von dem ein nach oben verlaufender und insbesondere senkrecht verlaufender dritter Abschnitt (2) nach oben abzweigt,
**dadurch gekennzeichnet ,**
- **dass** der dritte Abschnitt (2) vom zweiten Abschnitt (5) unterhalb des Übergangs vom zweiten Teil (3) des ersten Abschnitts der Rohrleitung zu dessen zweiten Abschnitt (5) abzweigt.

2. Drucklufthebeanlage nach Anspruch 1, **dadurch gekennzeichnet, dass** vom höchsten Punkt des zweiten Teils (3) des ersten Abschnitts und des zweiten Abschnitts (5) der Rohrleitung ein weiteres Entlüftungsrohr (1) nach oben und insbesondere im wesentlichen senkrecht nach oben abzweigt.

## Claims

1. A pneumatic lifting device for flowable materials, in particular for transferring wastewater from a chamber of a compact wastewater treatment plant into another chamber of said compact wastewater treatment plant or out from the same, comprising
- a pipeline having the following sections when in the operative state:
- a substantially V- or U-shaped or generally arc-shaped first section to whose first upward directed part a compressed air line may be connected near the lower end, and whose second upward directed part (3) is adjoined by a second downward directed section (5) from which an upward directed and in particular vertical third section (2) branches upward,
**characterized in that**
- the third section (2) branches from the second section (5) below the transition from the second part (3) of the first section of the pipeline to the second section (5) thereof.

2. The pneumatic lifting device of claim 1, **characterized in that** another vent pipe (1) branches upward, in particular substantially vertically upward, from the highest point of the second part (3) of the first section and the second section (5) of the pipeline.

## Revendications

1. Dispositif de levage pneumatique pour matières fluides, à savoir pour le transfert des eaux usées d'une chambre d'une petite station d'épuration dans une autre chambre de la petite station d'épuration ou pour les faire sortir de celle-ci, comprenant
- une conduite ayant, en état de service, les sections suivantes:
- une première section sensiblement en forme de V ou de U ou généralement arquée, sa première partie s'étendant vers le haut étant adaptée pour le raccordement d'une conduite d'air comprimé près du bout bas, sa deuxième partie (3) s'étendant vers le haut étant joint d'une deuxième partie (5) s'étendant vers le bas, de laquelle branche vers le haut une troisième section (2) s'étendent vers le haut, particulièrement verticalement,
**caractérisé en ce que**
- la troisième section (2) branche de la deuxième section (5) au-dessous de la jonction de la deuxième partie (3) de la première section de la conduite à la seconde section (5) de celle-ci.

2. Dispositif de levage pneumatique selon la revendication 1, **caractérisée en ce qu'**un autre tuyau de ventilation (1) branche vers le haut, et particulièrement verticalement vers le haut, du point le plus haut de la deuxième partie (3) de la première section et de la deuxième section (5) de la conduite.
